# EUROPEAN PATENT APPLICATION

(11) **EP 1 128 647 A2**
(43) Date of publication of application: **29.08.2001**
(21) Application number: 01301239.8
(22) Date of filing: 14.02.2001
(51) Int. Cl.: H04M 3/42

(54) **URL notification device for portable telephone**

(30) Priority: 21.02.2000 JP 2000043389
(71) Applicant: Hakuhodo Incorporated, Tokyo (JP)
(72) Inventor: Ono, Tatsuto, Hakuhodo Incorporated, Minato-ku, Tokyo (JP); Hiratsuka, Motoaki, Hakuhodo Incorporated, Minato-ku, Tokyo (JP); Matsuo, Hirochika, Hakuhodo Incorporated, Minato-ku, Tokyo (JP)
(74) Representative: Ertl, Nicholas Justin

(57) **Abstract**

A URL notification device (10) for a portable telephone comprises telephone network control means (16) for responding to a received call directed to a telephone number to be contacted for service, electronic mail network connection means (20) for exporting an optional electronic mail, a URL storage unit (26), telephone number/electronic mail address conversion means for acquiring the telephone number B of a caller when receiving the call and converting the number B to the mail address D allocated to the telephone of the number B, and electronic mail sending means for reading at least one URL from the URL storage unit in response to the received call from the caller telephone number B, creating an electronic mail message in which the URL is described in a text of the message in hypertext format and sending the mail to the address D by the network connection means.

## Description

The present invention relates to a device for allowing a user to access a variety of home pages with a portable telephone simply and quickly.

A number of mobile telecommunication terminals which are currently used such as cellular phones and PHS (hereinafter referred to as "portable telephones") have an electronic mail function and a browse function which displays contents of a home page on the Internet on a display as well as a voice communication function. Among data and information services intended to be used by the browse function, home pages for portable telephones are very important as various commercial advertising media.

Users always carry the portable telephones even when they are out and, most of the time, with its power on. Therefore, a very high advertising effect is expected if home page contents which can meet needs of each user for obtaining information can be transmitted to the user on time.

Thus, for example, there can be considered a case where an advertising poster hanging in a train can have such lines as "Get more information with your cellular phone now! Access the following URL. " and an address (URL) of the home page contents on the WWW network can be described. If a user of a portable telephone with the browse function, in this case, for example, an i-mode (trademark) portable telephone of NTT Mobile Communications Network, Inc., views the advertisement and becomes interested in the contents, the user would specify the described URL on his/her i-mode (trademark) portable telephone immediately to view the home page.

However, as described below, it has been very inconvenient for a user to enter a new URL into a conventional portable telephone. For example, in the case of the i-mode (trademark) portable telephone, to enter the URL, a button marked as "i" thereon is pressed to display a menu listing a variety of services for i-mode. This menu includes such items as "mail" and "Internet" and, in this case, "Internet" is selected. Then, such items as "URL entry" and "URL history" are displayed and, in this case, "URL entry" is selected. Then such a URL as "http://www.----/----/----/i/" which was entered last time is displayed with "OK" and "Cancel" displayed thereunder. At this point, when an enter key is pressed without selecting "OK" or "Cancel", a screen awaiting an entry of a URL described in alphabetic characters and numerics is displayed. On this screen, the URL of a desired home page is entered.

Meanwhile, character-entry buttons of a portable telephone are fewer in number than that of a keyboard of a personal computer, and the same buttons are therefore used for entering alphabetic characters and numerics. After pressing a button displayed as "character", a numeric-entry state ("number" is displayed on the display) and an English-letter-entry state ("English" is displayed on the display) are switched from each other. Since a URL comprises mainly alphabetic characters and numerics as well as symbols such as " : ", "/" and " . ", alphanumeric characters are entered by switching the two states as necessary.

Since alphabetic characters are larger in number than numeric-entry buttons, a plurality of alphabetic characters are allocated to each numeric-entry button. For example, since the alphabetic characters "G", "H" and "I" are allocated to the button "4", the button is needed to be pressed three times in the English-letter-entry state in order to enter "I". After the URL entry is completed, the enter button is pressed. Then, items "OK" and "Cancel" are displayed with the entered URL, and "OK" is selected. As a message "There are cases where the specified page may not be displayed. "together with "OK" again are displayed, the enter button is pressed. At last, a message "Now acquiring the page." is displayed, and an i-mode server starts to search the network for the desired home page and transmits the home page to the i-mode portable telephone as soon as the home page is found. The i-mode portable telephone receives the transmitted home page and displays it by a browser software.

As described above, it has heretofore taken much time and efforts to display the desired home page. Therefore, even if users found the URL of a home page, which attracted their attention in an advertising poster hanging in a train, many of the users did not bother to enter the URL in their portable telephones because it was very time-consuming to display the home page. Consequently, advertisers have been missing the chances of potential users who are interested in the advertised products and services to access the home pages of their companies due to the inconvenience in entering the URL into the portable telephone.

To the contrary, it is much easier to enter an ordinary telephone number into a portable telephone for carrying out voice communications. In the case of the above example, a desired telephone number is entered by using numeric-entry buttons when a normal voice communication screen is displayed, and a calling button is to be pressed. Under these circumstances, a variety of information services for a portable telephone by voice communications are popularly carried out. Meanwhile, the services also have several problems, one of which is that a rate system which charges for not the amount of transmitted and received data but the amount of communication time places a burden on users. Further, since a text and image data displayed on the browser of a portable telephone such as an i-mode portable telephone can be glanced through and therefore are easy to use, a technology to overcome the inconvenience associated with the URL entry has been desired.

The present invention seeks to provide a device for notifying a URL to a portable telephone, which allows a user to access a desired home page with the portable telephone simply, easily and quickly.

According to a first aspect of the present invention, there is provided a URL notification device for a portable telephone, comprising: telephone network control means which is connected to a public telephone network for responding to a received call directed to a telephone number to be contacted for service; electronic mail network connection means which is connected to a predetermined electronic mail network for exporting an optional electronic mail to an optional electronic mail address; a URL storage unit for storing properly set URLs; telephone number/electronic mail address conversion means for acquiring a telephone number B of a caller when receiving the call and converting the number B to an electronic mail address D allocated to the portable telephone of the number B; and an electronic mail sending means for reading at least one URL from the URL storage unit in response to the received call from the caller telephone number B, creating an electronic mail message in which the URL is described in a text of the mail message in hypertext format and sending the electronic mail to the electronic mail address D by the electronic mail network connection means.

According to a second aspect of the present invention, there is provided a URL notification device for a portable telephone, comprising: telephone network control means which is connected to a public telephone network for responding to received calls directed to a plurality of service telephone numbers to be contacted for service; electronic mail network connection means which is connected to apredetermined electronic mail network for exporting an optional electronic mail to an optional electronic mail address; a URL storage unit for storing at least one URL each of which is associated with each of the service telephone numbers in a proper memory; telephone number/electronic mail address conversion means for acquiring a caller telephone number B whose call is received at a service telephone number A and converting the number B to an electronic mail address D allocated to the portable telephone of the number B; and electronic mail sending means for reading at least one URL associated with the service telephone number A which is received the call from the caller telephone number B from the URL storage unit, creating the electronic mail message in which the URL is described in a text of the mail message in hypertext format and sending the electronic mail to the electronic mail address D by the electronic mail network connection means.

Examples of the present invention will now be described in detail, with reference to the accompanying drawings, in which:
Figure 1 is a schematic diagram of a communication network involving a URL notification device of one embodiment of the present invention;
Figure 2 is a schematic diagram of a mail server in one embodiment of the present invention;

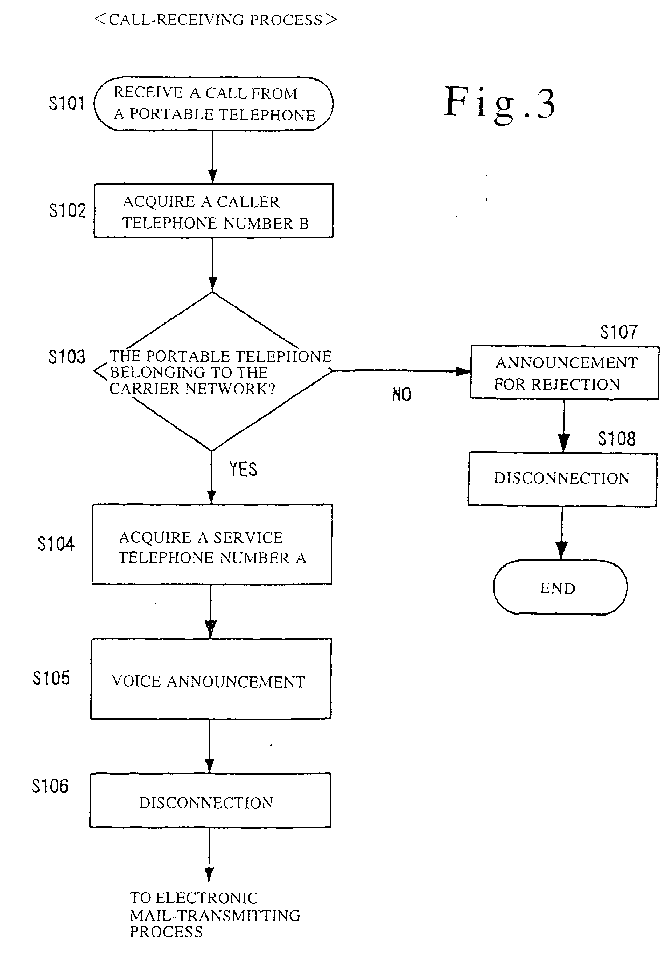

Figure 3 is a flowchart of a call-receiving process carried out by the URL notification device of the above embodiment; and,

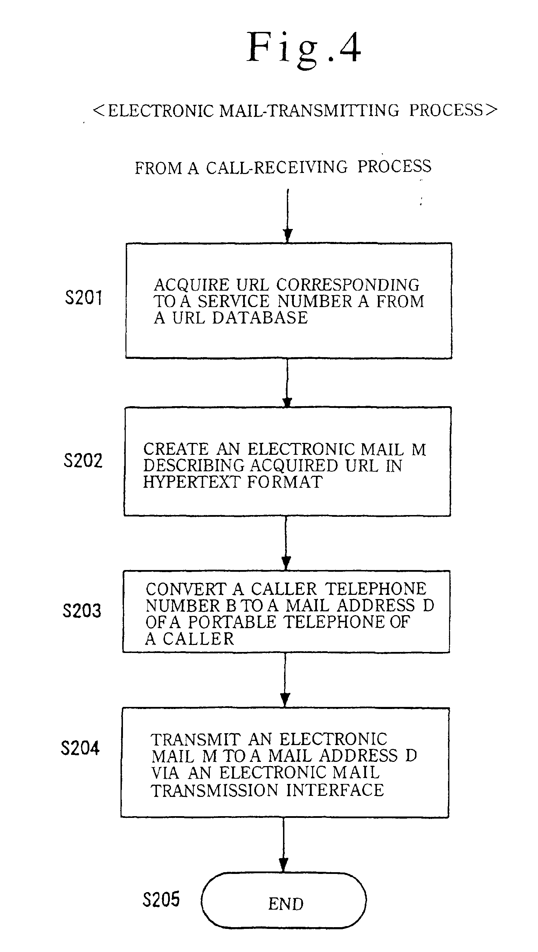

Figure 4 is a flowchart of an electronic mail-transmitting process carried out by the URL notification device of the above embodiment.

In the present specification, a term "URL" indicates an address of a home page on the World Wide Web and the like. Further, the term "portable telephone" includes not only so-called usual cellular phones but also PHS and mobile information terminals and indicates all that a user need carry around outside or the like for voice communications or transmitting and receiving data such as electronic mails.

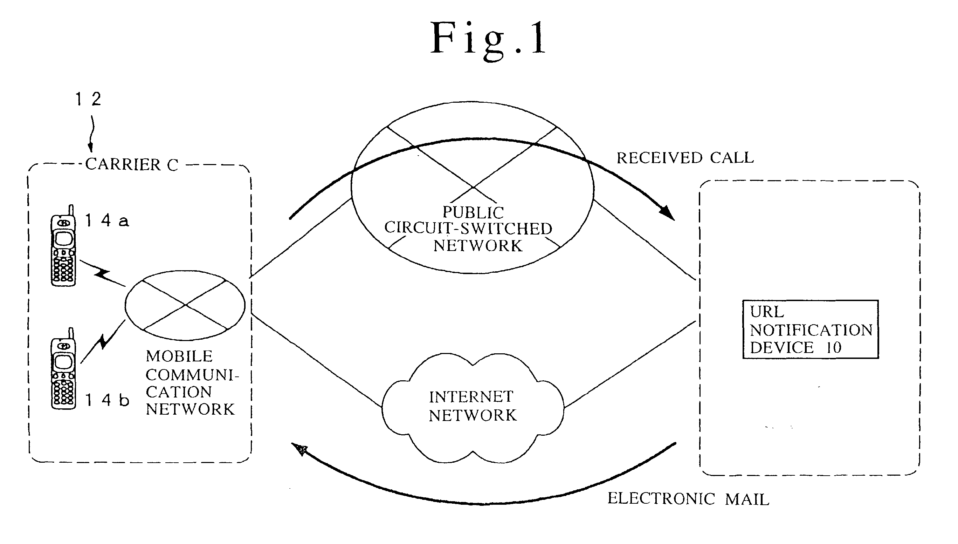

Figure 1 shows a schematic diagram of a portable telephone communication network involving a URL notification device 10 for a portable telephone (hereinafter referred to as "URL notification device") in one embodiment of the present invention.

Portable telephones 14a and 14b belonging to the mobile communication network 12 managed by a particular carrier C are connected to the mobile communication network via aradio interface. This mobile communication network is connected to a public circuit-switched network via a gateway switching station and can be communicated with general subscribed telephones. Further, these portable telephones 14a and 14b are also connected to the Internet via a packet communication transmission path. Since these portable telephones 14a and 14b have a browse function and a function of transmitting and receiving electronic mails, they can refer to home page contents or transmit and receive Internet mails.

The URL notification device 10 of the present invention is connected to both the public circuit-switched network and the Internet network, respectively in the present embodiment, and a plurality of predetermined telephone numbers (hereinafter referred to as "service telephone numbers") and IP addresses are allocated to the URL notification device 10. Therefore, the URL notification device 10 can receive calls directed via the public circuit-switched network to the service telephone numbers from any subscribed telephones including the portable telephones 14a and 14b. In addition, the URL notification device 10 can transmit and receive electronic mails to and from the portable telephones 14a and 14b via the Internet network.

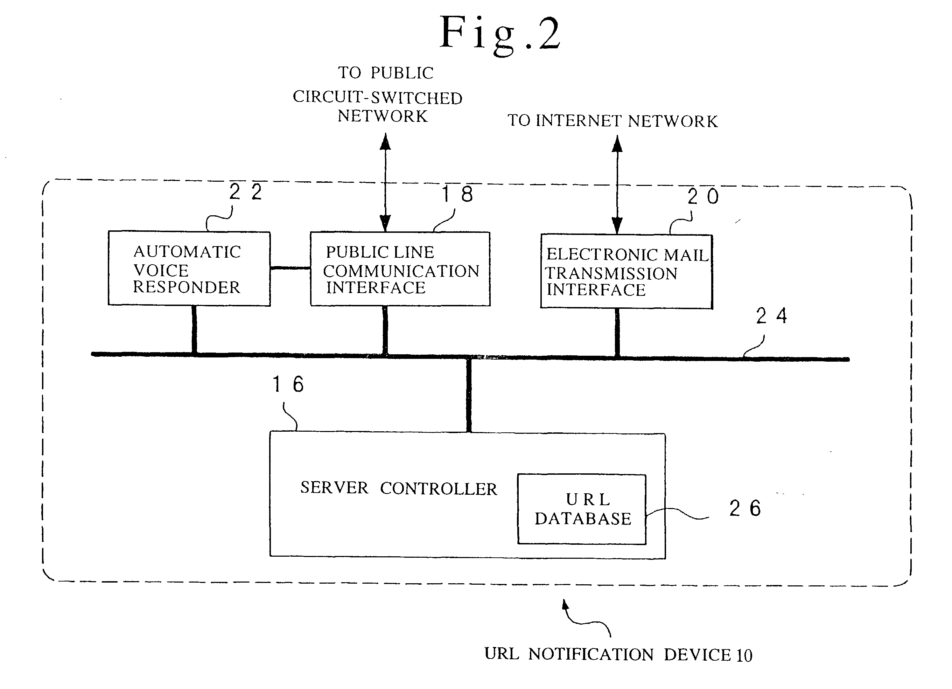

Figure 2 schematically shows components of the URL notification device 10. For a server controller 16 an ordinary personal computer constituted by a computer body and peripheral devices such as a monitor can be used. The URL notification device 10 is a computer system in which each peripheral component such as a public line communication interface 18, an electronic mail transmission interface 20 and an automatic voice responder 22 is connected to the server controller 16 via an appropriate data-transferring path 24 such as a bus. The server controller 16 controls by conducting data communications with the peripheral components respectively and unifies the URL notification device 10.

Further, a URL database 26 is provided in a storage unit of the server controller 16. In this URL database 26 is stored a list of URL's each of which is associated with each of the plurality of service telephone numbers. The public line communication interface (hereinafter referred to as "line interface") 18 is an interface to conduct communication between voice signals and the public circuit-switched network. The electronic mail transmission interface (hereinafter referred to as "mail interface") 20 is an interface to export an electronic mail to an optional mail address on the Internet network.

The automatic voice responder (hereinafter referred to as "responder") 22 communicates with the telephone which has originated a call to the URL notification device 10 by voice signals. Therefore, the responder 22 provides interfaces to transmit the voice signals to an A/D converter and a D/A converter which encodes and expands the voice signals respectively, the storage unit storing digital voice data corresponding to responding voices, and the line interface 18.

Next, a method for using the URL notification device 10 and operation thereof will be described using the following embodiment. That is, a situation is considered in which there exists an advertising poster hanging in a train or advertisement in a magazine which contains such a description as "Should you want to know more about the contents of this advertisement, access the following telephone number with your portable phone now!: OOO-XXXX." The telephone number OOO-XXXX is one of the specially prepared telephone numbers for the service, and dialing any one of such telephone numbers for originating a call is all connected to the URL notification device 10 (these telephone numbers are called "service telephone numbers" inoneembodiment of the present invention). Note that in this embodiment, a plurality of service telephone numbers are received by one URL notification device, but the URL notification device may be configured to handle only one service telephone number.

When a user of a portable telephone H who saw the above advertisement makes a call to the URL notification device 10 of the present invention by dialing the telephone number OOO-XXXX (service telephone number A), the URL notification device 10 returns an electronic mail describing the URL of the home page related to the advertisement described in the service telephone number OOO-XXXX to the user. Note that the URL notification serviceinthisembodimentisintendedonlyforportabletelephones belonging to a particular mobile communication carrier C.

First, when a user who saw the advertisement originates a call by dialing the service telephone number A described on the advertisement (S101), a voice communication channel is connected between the portable telephone of the user and the URL notification device via the public circuit-switched network. The server controller 16 of the URL notification device 10 which received the call acquires a caller telephone number B of the user through the line interface 18 (S102). Then, the server controller 16 checks to determine whether the caller telephone number Bis a portable telephone belonging to the telephone network of the particular carrier C (S103) which is entitled to receiving the service in the URL notification device 10. Since a sequence of telephone numbers of aportable telephone cangenerally identify the carrier whom the portable telephone belongs to, a sequence of telephone number B are only to be recognized to be determined whether the portable telephone belongs to the carrier C.

To acquire the caller telephone number B, the caller telephonenumbernotificationfunction (callerID) oftheportable telephone may be also used. When the portable telephone of the originator is configured not to notifythe caller telephone number, such an automatic voice message as "Please call again after turning on to set the caller telephone number notification." is sent through the line interface 18 to the portable telephone by the responder 22 to urge the user to notify the caller telephone number, and then the telephone line is disconnected.

When it is determined that the above acquired caller telephone number B is the number belonging to the carrier C, the service telephone number A is then acquired as the next process step (S104). However, when it is determined that the caller telephone number B is the number of a portable telephone belonging to a carrier other than the carrier C, such an announcement for rejection as "Sorry, but please call again with a portable telephone of the carrier C." is sent to the portable telephone (S107), and then the telephone line is disconnected (S108) to finish the process. Further, when it is determined that the caller telephone number B is not the number of the portable telephone but that of an ordinary subscribed telephone, such an announcement as "This service is available only for a portable telephone. Please call again with a portable telephone of the carrier C." is sent to the subscribed telephone by the responder 22, and then the telephone line is disconnected.

When the service telephone number A is acquired (S104), such an announcement as "Thank you for calling. We are going to send you an electronic mail. Please hang up and wait." is sent to the portable telephone, and then the telephone line is disconnected (S106).

The server controller 16 obtains the URL stored in advance in association with the acquired service telephone number A from a URL database 26 (S201). Each of the service telephone numbers is associated with the URL of a home page related to the advertisement in which the service telephone number is appended. Each service telephone number may be associated with a plurality of such URLs (hereinafter referred to as "URL set" including the case where the number of URL is one or more than one).

Then, an electronic mail M in which the obtained URL is embedded and described in hypertext format is created (S202). This electronic mail M may contain a proper advertising text or a message such as "Thank for using our service." in addition to the above URL.

The caller telephone number B is converted to the electronic mail address of the portable telephone of the caller in accordance with a predetermined rule (S203). The predetermined rule, for example, is such that in the case of the i-mode portable telephone of NTT Mobile Communications Network, Inc., an electronic mail address comprising the telephone number of each portable telephone itself and a predetermined domain name is allocated to each portable telephone. Therefore, when a call is received from a portable telephone identified by the caller telephone number of 0904XXXXXXX, the telephone number is converted to an electronic mail address 0904XXXXXXX@docomo.ne.jp. Note that the telephone number/electronic mail address-converting process (S203) may not be carried out at the timing used in this embodiment and may be carried out before the above URL-reading process (S201) or before the above electronic mail-creating process (S202) or in parallel with these processes.

Next, the created electronic mail M is transmitted to the electronic mail address D via a mail interface 20 (S204). This electronic mail M is received by a user of the portable telephone H. Since the URL of the home page which the user desires to view is described in hypertext format in the electronic mail M, just by clicking on the URL (or otherwise selecting such as by using an arrow key or the like to highlight the URL and then pressing the enter key) , the contents of the home page identified by the URL are immediately transmitted from the mobile communications network of the carrier C to the portable telephone H. As soon as the contents of the home page are transmitted, the user can view the home page.

In the above embodiment, one URL set is prepared for one service telephone number and stored in the URL database 26 in advance. However, a plurality of different URL sets may be prepared for one service telephone number. For example, it is assumed that the home page of a restaurant has two types of contents, one of which is for daytime placing such a line as "Today's lunch menu" and the other of which is for nighttime placing such a line as "Today' s special dinner course" . For the user originated a call by dialing the service telephone number corresponding to the home page information of the restaurant, a process in consideration of the time when the call was originated is carried out in the server controller 16, and the above URL for daytime is read out, described in an electronicmail, and then transmitted. Thus, by reflecting the temporal element at the time of carrying out the process for selecting a URL, a home page having more individualized information can be delivered quickly, thereby more largely increasing an advertising effect.

Further, in place of/in addition to classifying the URL to be described in the electronic mail based on the temporal element, the location information of the portable telephone which is originated the call may be acquired to reflect the URL of the location information (for example, URL of the home page of a restaurant located near the user of the portable telephone) to be described in the electronic mail and transmitted. In this manner, a home page having more individualized information can be delivered quickly, thereby more largely increasing an advertising effect.

Further, although the URL notification device 10 in the above embodiment is constituted by one computer, depending on the extent of offered services, a CTI server, a database server and an electronic mail server may be operated independently with other peripheral components connected to these computers via an appropriate data transmission path.

Furthermore, although the URL notification device 10 in the above embodiment is connected to the mobile communications network of the carrier C via the Internet network, they can be connected to each other via a data communication network (such as a packet transmission path network) and a leased line of the carrier C if data communications can be carried out in accordance with a prescribed protocol. Similarly, although the URL notification device 10 in the above embodiment receives a call from the carrier via the public circuit-switched network, the gateway in the mobile communications network and the URL notification device 10 can be connected directly with each other via the leased line.

Still further, although the URL notification service in the above embodiment is intended only for portable telephones belonging to a single mobile communication carrier C, it is also possible to provide the service to a plurality of mobile communication carriers, that is, to receive a call from a portable telephone belonging to any of the mobile telephone networks administrated by a plurality of carriers and transmits an electronic mail containing a URL to the portable telephone.

In the above embodiment, it is classified to determine in the server controller 16 whether the caller telephone number B is the number of a portable telephone belonging to the telephone network of the carrier C, which is entitled to receive the service (S103). However, it is also possible to have a configuration that such a classification process may not be specially provided when a note such as " *This service is only for portable telephones of a carrier C." is included in the advertisement at first. In that case, for example, even if a call is received from a portable telephone, which is not entitled to receiving the service, the electronic mail is transmitted anyway. The electronic mail, however, cannot be delivered to the portable telephone which is not entitled to the service, with its destination unknown.

In addition, to acquire the caller telephone number B, the established connection of the telephone line between the portable telephone of the user and the URL notification device may not required. Namely, if the number of ringing time from the portable telephone to the URL notification device is more than a preset number at the URL notification device, then the device will establish the connect. And even though the user stops the calling of the portable telephone less than the prescribed ringing time, the URL notification device can acquire the caller telephone number B as stated above. In the mean time, the user need not pay the calling fee.

For example, when a user of a portable telephone who saw an advertising poster hanging in a train or an advertising page in a magazine and became interested in its contents originates a call by dialing the telephone number appended in the advertisement, an electronic mail in which the URL of the home pagerelated to the advertisement is described in hypertext format is sent back immediately. By clicking the URL described in the electronic mail (or using the arrow key to highlight the URL and then pressing the enter key) , the contents of the home page identified by the URL are transmitted to the portable telephone immediately and can be viewed. As compared with the conventional manner in which the URL is entered into a portable telephone by pressing the buttons for each character with a finger to receive and view the desired home page contents, the desired home page can be viewed much more simply, easily and quickly.

As a result, advertisers can enjoy a great advertising effect since home page contents can be delivered quickly to the users who are interested in their advertised products and services.

Further, since the temporal element at the time of carrying out the process or the location information of the caller can be reflected on selecting the URL to be described in the electronic mail, the home page having more individualized information can be delivered quickly, thereby more largely increasing an advertising effect.

In addition, it is possible to notify the caller using a portable telephone which is not entitled to receive the service that he/she cannot receive the service with the portable telephone and urge the caller to call again with the portable telephone which is entitled to receiving the service.

## Claims

1. A URL notification device (10) for a portable telephone,
characterised by:
telephone network control means (10) which is connected to a public telephone network (18) for responding to a received call directed to a telephone number to be contacted for service;
electronic mail network connection means (20) which is connected to a predetermined electronic mail network for exporting an optional electronic mail to an optional electronic mail address ;
a URL storage unit (26) for storing predetermined URLs;
telephone number/electronic mail address conversion means for acquiring a telephone number B of a caller when receiving the call and converting the number B to an electronic mail address D allocated to the portable telephone of the number B; and
electronic mail sending means for reading at least one URL from the URL storage unit in response to the received call from the caller telephone number B, creating an electronic mail message in which the URL is described in a text of the mail message in hypertext format and sending the electronic mail to the electronicmail address D by the electronic mail network connection means.

2. A URL notification device (10) for a portable telephone,
characterised by:
telephone network control means (10) which is connected to a public telephone network (18) for responding to received calls directed to a plurality of service telephone numbers to be contacted for service;
an electronic mail network connection means (20) which is connected to a predetermined electronic mail network for exporting an optional electronic mail to an optional electronic mail address;
a URL storage unit (26) for storing at least one URL, each URL being associated with a respective service telephone numbers in a memory;
telephone number/electronic mail address conversion means for acquiring a caller telephone number B whose call is received at a service telephone number A and converting the number B to an electronic mail address D allocated to the portable telephone of the number B; and
electronic mail sending means for reading at least one URL associated with the service telephone number A which is received the call from the caller telephone number B from the URL storage unit, creating the electronic mail message in which the URL is described in a text of the mail message in hypertext format and sending the electronic mail to the electronic mail address D by the electronic mail network connection means.

3. A URL notification device for a portable telephone according to any one of claims 1 or 2, further comprising: number classification means for acquiring the telephone number of the caller when the telephone network control means receives the call and determining whether the caller telephone number is the number belonging to a predetermined portable telephone network,
wherein the telephone number/electronic mail address conversion means and theelectronic mail sending means are operated when the caller telephone number is determined as the number belonging to the predetermined portable telephone network by the number classification means.

4. A URL notification device for a portable telephone according to claim 3,
where in an automatic voice response is carried out to notify that the caller telephone number is not entitled to receiving the service when the caller telephone number is determined as the number not belonging to the predetermined portable telephone network by the number classification means.

5. A URL notification device for a portable telephone according to any one of claims 1, 2 or 4,
wherein a plurality of URLs are associated with one service telephone number in the URL storage unit, and the electronic mail sending means selects a URL to be described in an electronic mail from the plurality of URLs based on a temporal element at a time when a process is performed.

6. A URL notification device for a portable telephone according to claim 3,
wherein a plurality of URLs are associated with one service telephone number in the URL storage unit, and the electronic mail sending means selects a URL to be described in an electronicmail from the plurality of URLs based on a temporal element at a time when a process is performed.

7. A URL notification device for a portable telephone according to any one of claims 1, 2 or 4,
wherein a plurality of URLs are associated with one service telephone number in the URL storage unit, and the electronic mail sending means acquires location information of the portable telephone of the caller when the telephone network control means receives the call and selects the URL to be described in the electronic mail message from the plurality of URLs based on the location information.

8. A URL notification device for a portable telephone according to claim 3,
where in a plurality of URLs are associated with one service telephone number in the URL storage unit, and the electronic mail sending means acquires location information of the portable telephone of the caller when the telephone network control means receives the call and selects the URL to be described in the electronic mail message from the plurality of URLs based on the location information.

9. A method for providing a URL to a portable telephone comprising the steps of:
receiving a call directed to one of a plurality of predetermined service telephone numbers;
obtaining a URL associated with said respective telephone service number;
embedding the URL in an electronic mail message;
addressing the electronic mail message to the caller; and,
transmitting the electronic mail message to the caller.

10. A computer program comprising computer program code means for performing all the steps of claim 9 when said program is run on a computer.

11. A computer program as claimed in claim 10 embodied on a computer readable medium.
